# EUROPÄISCHE PATENTSCHRIFT

(11) **EP 1 541 270 B1**
(45) Veröffentlichungstag und Bekanntmachung des Hinweises auf die Patenterteilung: **03.01.2007**
(21) Anmeldenummer: 04026029.1
(22) Anmeldetag: 03.11.2004
(51) Int. Cl.: B23D 63/12, B23Q 11/00, B23Q 1/48

(54) **Maschine zum Schleifen von Bandsägeblättern**
Machine for dressing band saw blades
Machine pour dresser des lames de scie a ruban

(30) Priorität: 12.12.2003 DE 10358323
(43) Veröffentlichungstag der Anmeldung: 15.06.2005
(73) Patentinhaber: VOLLMER WERKE MASCHINENFABRIK GMBH, D-88400 Biberach (DE)
(72) Erfinder: Riehlein, Fritz, 88433 Schemmerhofen-Alberweiler (DE); Bailer, Norbert, 88433 Schemmerhofen-Altheim (DE)
(74) Vertreter: Thum, Bernhard

(56) Entgegenhaltungen:
- DE-A1- 3 537 059
- US-A- 2 590 992

## Beschreibung

Die vorliegende Erfindung betrifft eine Maschine zum Bearbeiten von mit Schneidzähnen versehenen langgestreckten Werkstücken, insbesondere zum Schleifen von Bandsägeblättern nach dem Oberbegriff von Patentanspruch 1.

Bei einer Maschine wie sie beispielsweise aus der WO 96/37328 bekannt ist, umfasst die Bearbeitungseinrichtung eine drehantreibbare Schleifscheibe, wobei der Drehantrieb für die Schleifscheibe und diese selbst auf einem Schleifschlitten angebracht sind, der entlang einer Linearführung verlagerbar ist. Dadurch kann die drehangetriebene Schleifscheibe hubartig nach oben und nach unten bewegt werden, das heißt zwischen einer Freigabestellung, in welcher ein zu bearbeitendes Bandsägeblatt von der Schleifscheibe mit hinreichendem Spielraum freigegeben wird, und einer Bearbeitungsstellung verlagert werden, in welcher die Schleifscheibe in Wechselwirkung mit zu bearbeitenden Bereichen des Bandsägeblattes tritt. Die Vorrichtung gemäß der WO 96/37328 hat jedoch den Nachteil, dass auf dem Schleifschlitten verhältnismäßig massereiche Komponenten angeordnet und gehalten sowie entlang der Verlagerungsrichtung linear bewegt werden müssen. Dabei stellt sich insbesondere das Problem ein, dass herkömmliche Linearantriebe in der Regel keine Selbsthemmungswirkung besitzen, so dass Feststellmittel vorgesehen werden müssen, um den Schleifschlitten in einer vorbestimmten Position arretieren zu können, beispielsweise in der Freigabestellung, wenn die Maschine ausgeschaltet oder in einen Leerlaufbetrieb überführt wird. Dies erfordert zusätzlichen technischen Aufwand.

Stand der Technik sind ferner Maschinen zum Bearbeiten von mit Schneidzähnen versehenen langgestreckten Werkstücken, bei welchen die Hubbewegung des Werkzeugs, insbesondere der Schleifscheibe, dadurch realisiert wird, dass die Bearbeitungseinrichtung im Stile eines Pendels ausgebildet ist und um einen Schwenkpunkt verschwenkt wird, wobei die Schleifscheibe sich auf einer kreissegmentförmigen Bahn um den Schwenkpunkt herum bewegt. Derartige Vorrichtungen haben den Nachteil, dass das zu bearbeitende Werkstück, insbesondere ein Bandsägeblatt, aufgrund der Bewegung der Schleifscheibe auf einer kreissegmentförmigen Bahn nicht gleichmäßig bearbeitet wird. Vielmehr kann es aufgrund der kreissegmentförmigen Bahn des Werkzeugs zum Ausbilden eines schrägen Zahngrundes oder Zahnrückens kommen. Dies führt bei späterem Einsatz des Bandsägeblattes zu einer asymmetrischen Kraftverteilung aufgrund der asymmetrischen Geometrie des geschliffenen Zahnes. Die während des Sägens an dem jeweiligen Sägezahn auftretende asymmetrische Kraftverteilung führt letztendlich zu einem unerwünschten Krummschnitt, da das Sägeblatt in dem zu bearbeitenden Werkstoff "verläuft". Darüber hinaus kann ein schräggeschliffener Zahngrund aufgrund der asymmetrischen Kraftverteilung beim Sägen und aufgrund der Kerbwirkung der beim Schleifen aufgetretenen Riefen das Risiko der Entstehung von Blattrissen erhöhen.

Das Dokument US 2,590,992 offenbart eine Maschine zum Schärfen von Sägen nach dem Oberbegriff von Patentanspruch 1. Diese Maschine weist eine Hebelanordnung mit insgesamt vier Schwenkachsen auf, die derart angeordnet sind, dass sich ein Maschinenarm mit Bearbeitungswerkzeug in Bezug auf Sägezähne einer zu bearbeitenden Säge in einem begrenzten Schwenkwinkelbereich linear bewegt. Aufgrund von Lager-und Fertigungstoleranzen und insbesondere infolge von Verschleiß kommt es aber zu erheblichen Führungsungenauigkeiten, die durch die langen Hebelarme verstärkt werden.

DE 3 537 059 A1 offenbart ein Verfahren und eine Vorrichtung zum Schleifen der Zähne von Sägebändern oder Sägeblättern, bei dem ein rotierendes Schleifrad, das sich quer zu der Längsrichtung der Sägebänder hin und her bewegt, Verwendung findet. Dabei ist vorgesehen, dass das Schleifrad zu Beginn jeder Hin- und Herbewegung um ein vorbestimmtes Maß entsprechend der Abnutzung des Schleifrades nach einem Schleifzyklus eingestellt bzw. abgesenkt wird. Weiterhin ist vorgesehen, dass das Schleifrad an einem anderen Schleifrad zur Nachschleifung des ersten Schleifrades vorbeiläuft. Dabei führt das Schleifrad zum Schleifen der Sägezähne eine lineare Hin-und Herbewegung aus.

Es ist demgegenüber Aufgabe der vorliegenden Erfindung, eine Maschine der eingangs bezeichneten Art bereitzustellen, welche bei einfachem Aufbau eine zuverlässige und maßgenaue Bearbeitung von Werkstücken ermöglicht, wobei unerwünscht asymmetrische Schliffgeometrien weitgehend ausgeschlossen werden.

Diese Aufgabe wird durch eine Maschine der eingangs beizeichneten Art gelöst, bei welcher die Bearbeitungseinrichtung vermittels einer Schwenklageranordnung gelagert ist, die eine Schwenkbewegung der Bearbeitungseinrichtung relativ zu der Maschinenbasis zulässt, durch welche sich das Werkzeug relativ zu der Maschinenbasis und dem Werkstück linear bewegt.

Zur Realisierung einer zuverlässigen Linearbewegung des Werkzeugs relativ zu der Maschinenbasis und relativ zu dem Werkstück, die auch nach längerem Gebrauch der Maschine verschleißbeständig bleibt, sieht die Erfindung dabei vor, dass die Bearbeitungseinrichtung vermittels eines Linearantriebs relativ zu der Maschinenbasis entlang einer ersten Linearverlagerungsachse linear verlagerbar ist. Hinsichtlich der Ausbildung des Linearantriebs sieht die Erfindung vor, dass dem Linearantrieb eine Linearführung, vorzugsweise eine Doppellinearführung, zugeordnet ist.

Ferner kann in diesem Zusammenhang vorgesehen sein, dass der Linearantrieb einen Kugelgewindetrieb aufweist. Dadurch ist ein verhältnismäßig effektiver, insbesondere reibungsarmer, Linearantrieb möglich.

Erfindungsgemäß ist eine Maschine vorgesehen, bei der das Werkzeug über eine Schwenklageranordnung verschwenkt wird. Allerdings ist die Schwenklageranordnung derart ausgebildet, dass das Werkzeug, insbesondere die Schleifscheibe, bei der Schwenkbewegung der Bearbeitungseinrichtung eine lineare Bewegung ausführt. Durch die Realisierung einer linearen Bewegung des Werkzeugs bezüglich der Maschinenbasis und des Werkstücks mittels einer Schwenklageranordnung, mit der die Bearbeitungseinrichtung verschwenkt wird, kann einerseits ein gleichmäßiges, das heißt lineares, "Eintauchen" des Werkzeugs in das zu bearbeitende Werkstück erfolgen, so dass eine symmetrische Geometrie der zu bearbeitenden Schneidzähne gewährleistet ist. Andererseits kann durch die Schwenklagerung der Bearbeitungseinrichtung ein Teil der Bearbeitungseinrichtung entsprechend dem mechanischen Grundkonzept einer Wippe als Masseausgleich genutzt werden, um gegenüber dem mit dem Werkzeug versehenen Teil der Bearbeitungseinrichtung ein Gegengewicht zu bilden, welches es ermöglicht, das Werkzeug allenfalls mit geringem Kraftaufwand in einer das zu bearbeitende Werkstück freigebenden Freigabestellung zu halten.

Bezüglich der Schwenklageranordnung ist in einer Weiterbildung der Erfindung vorgesehen, dass diese wenigstens eine Schwenklagerlasche aufweist, die um eine erste Schwenkachse relativ zu der Maschinenbasis verschwenkbar ist und an der um eine zu der ersten Schwenkachse parallele zweite Schwenkachse schwenkbar die Bearbeitungseinrichtung gelagert ist. Durch die Ausbildung der Schwenklageranordnung mit wenigstens einer Schwenklasche, die eine erste Schwenkachse und eine zu der ersten Schwenkachse parallele zweite Schwenkachse bereitstellt, ist es möglich, den mit dem Werkzeug versehenen Teil der Bearbeitungseinrichtung, beispielsweise mit der vorstehend angesprochenen Linearführung, linear zu verlagern, wobei sich sowohl die wenigstens eine Schwenklagerlasche um die erste Schwenkachse relativ zu der Maschinenbasis verschwenkt und wobei sich die Bearbeitungseinrichtung um die zu der ersten Schwenkachse parallele zweite Schwenkachse relativ zu der Schwenklagerlasche verschwenkt. Mit anderen Worten kann sich die Bearbeitungseinrichtung bei einer Linearbewegung entlang der ersten Linearverlagerungsachse linear bewegen, wobei eine Verschwenkung um die zweite Schwenkachse erfolgt und eine zusätzliche Schwenkbewegung der Schwenklagerlasche um die erste Schwenkachse erfolgt. Bezüglich der Lage der Schwenkachsen sieht eine Weiterbildung der Erfindung vor, dass die erste und zweite Schwenkachse jeweils im wesentlichen orthogonal zur ersten Linearverlagerungsachse verlaufen. Um eine mechanisch stabilere Anordnung mit hoher Führungsgenauigkeit bereitzustellen, sieht eine Weiterbildung der Erfindung vor, dass die Schwenklageranordnung zwei Schwenklagerlaschen aufweist, die beidseits der Bearbeitungseinrichtung angeordnet sind.

Vorzugsweise ist bei einer Weiterbildung der Erfindung vorgesehen, dass die Bearbeitungseinrichtung einen Wipparm aufweist, an dessen einen Endbereich das drehantreibbare Werkzeug angeordnet ist und an dessen entgegengesetzten anderen Endbereich ein Drehantrieb zum Drehantreiben des Werkzeugs angeordnet ist. Um eine effektive Raumausnutzung gewährleisten zu können, sieht eine Weiterbildung der Erfindung vor, dass die erste Schwenkachse oberhalb des Wipparms verläuft und dass die zweite Schwenkachse unterhalb des Wipparms verläuft.

Der vorstehend angesprochene Masseausgleich wird erfindungsgemäß insbesondere dadurch genutzt, dass die zweite Schwenkachse bezüglich des Wipparms derart angeordnet ist, dass die Masse des Drehantriebs die Bearbeitungseinrichtung in einer Richtung zu verschwenken sucht, so dass sich das Werkzeug von dem Werkstück weg bewegt. Mit anderen Worten ist das an dem den Drehantrieb aufweisenden Endbereich wirkende Drehmoment größer als das an dem das Werkzeug aufweisenden Endbereich angreifende Drehmoment, so dass in einer Ruhestellung, in der der Linearantrieb der Bearbeitungseinrichtung nicht bestromt wird, sich das drehantreibbare Werkzeug leicht mit allenfalls geringem Kraftaufwand gegen den Widerstand des nicht bestromten Linearantriebs in seine Freigabestellung zurück bewegen lässt, in welcher es nicht in die zu bearbeitenden Schneidzähne eingreift und das zu bearbeitende Werkstück freigibt.

Eine Weiterbildung der Erfindung sieht vor, dass der Drehantrieb und das Werkzeug über eine Getriebeanordnung, vorzugsweise über einen Riementrieb kraftübertragend gekoppelt sind. Um einen zusätzlichen Freiheitsgrad bei der Bearbeitung der Schneidzähne zu erhalten, sieht eine Weiterbildung der Erfindung vor, dass die Maschine einen Lagerkörper aufweist, der um eine dritte Schwenkachse an der Maschinenbasis schwenkbar gelagert ist, wobei an dem Lagerkörper die Bearbeitungseinrichtung um die erste und zweite Schwenkachse schwenkbar gelagert ist. Hierbei kann vorgesehen sein, dass die dritte Schwenkachse im Wesentlichen orthogonal zu der ersten und zweiten Schwenkachse und im Wesentlichen orthogonal zu der ersten Linearbewegungsachse verläuft. Dadurch ist es möglich, die Bearbeitungseinrichtung auch um die dritte Schwenkachse zu verschwenken, um die Bearbeitung der Zahnbrust einzelner Schneidzähne, insbesondere den Spanwinkel, variieren zu können.

Ein weiterer Freiheitsgrad für die Werkstückbearbeitung ergibt sich bei einer Weiterbildung der Erfindung dadurch, dass das drehantreibbare Werkzeug entlang einer zweiten Linearverlagerungsachse verlagerbar ist, wobei die zweite Linearverlagerungsachse jeweils im wesentlichen orthogonal zur ersten Linearverlagerungsachse und zur dritten Schwenkachse verläuft. Durch die Bereitstellung einer Bewegungsmöglichkeit entlang der zweiten Linearverlagerungsachse kann die erfindungsgemäße Maschine auf unterschiedliche Materialstärken des zu bearbeitenden Werkstücks, insbesondere auf unterschiedliche Blattdicken von Bandsägeblättern, eingestellt werden.

Ferner kann erfindungsgemäß vorgesehen sein, dass die Bewegung entlang der ersten Linearverlagerungsachse oder/und entlang der zweiten Linearverlagerungsachse oder/und um die dritte Schwenkachse numerisch gesteuert ist. In diesem Zusammenhang, aber auch bei nicht numerisch gesteuerten Achsen ist bei einer vorteilhaften Ausführungsform der Erfindung vorgesehen, dass der Drehantrieb einen Antriebsmotor aufweist, der vorzugsweise von einem frequenzgeregelten Drehstrommotor oder einem AC-Motor zur Konstanthaltung der Umfangsgeschwindigkeit gebildet ist.

Die Erfindung wird im Folgenden anhand der beiliegenden Figuren beispielhaft beschrieben. Es stellen dar:
- Fig. 1: eine Vorderansicht einer erfindungsgemäßen Maschine, wobei sich die Bearbeitungseinrichtung in einer Freigabestellung befindet;
- Fig. 2: eine Ansicht entsprechend Fig. 1, wobei die Bearbeitungseinrichtung verschwenkt ist;
- Fig. 3: eine Ansicht entsprechend Fig.1 und 2 mit gegenüber Fig.2 weiter verschwenkter Bearbeitungseinrichtung;
- Fig. 4: eine Ansicht entlang der Schnittlinie IV-IV aus Fig.1;
- Fig. 5: eine Ansicht entlang Schnittlinie V-V aus Fig.2, wobei jedoch lediglich der linke Bereich ausgeschnitten ist;
- Fig. 6: eine Ansicht entlang Schnittlinie VI-VI aus Fig.2; und
- Fig. 7: eine Ansicht in Betrachtungsrichtung VII gemäß Fig.3, jedoch mit verschwenkten Lagerkörper.

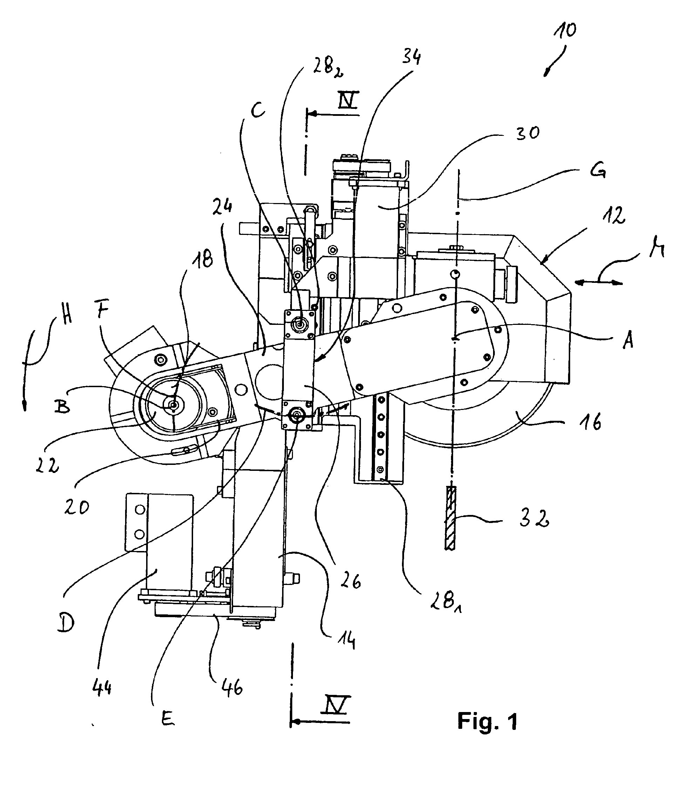

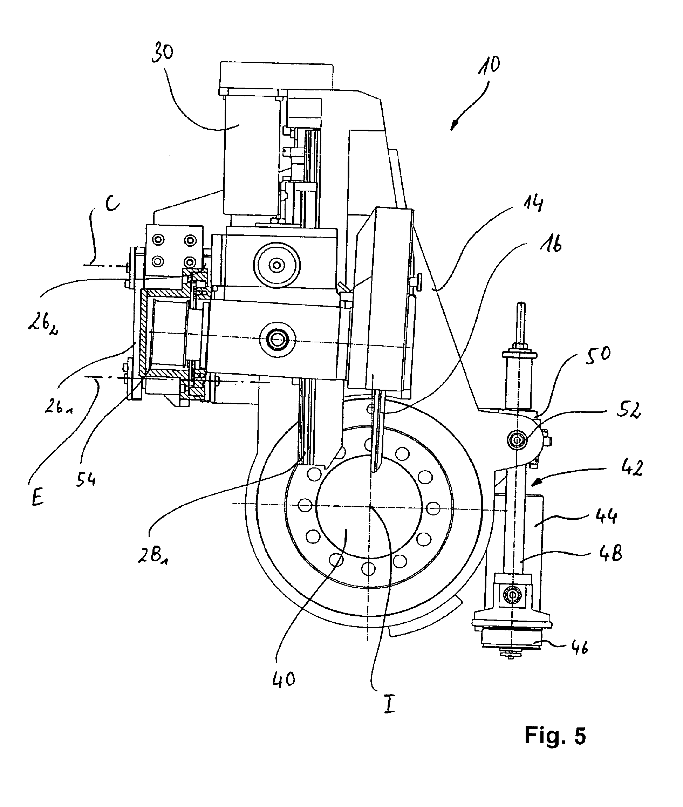

In Fig.1 bis 3 ist eine erfindungsgemäße Maschine allgemein mit 10 bezeichnet. Die Maschine 10 umfasst eine Bearbeitungseinrichtung 12, die an einem Lagerkörper 14 gelagert ist. Der Lagerkörper 14 ist wiederum an einer in Fig.1 nicht gezeigten Basis gelagert. Die Bearbeitungseinrichtung 12 umfasst ein als Schleifscheibe 16 ausgebildetes Werkzeug, wobei die Schleifscheibe 16 um eine zur Zeichenebene gemäß der Fig. 1 orthogonal verlaufende Antriebsachse A drehantreibbar ist. Der Drehantrieb erfolgt ausgehend von einem Antriebsmotor 18 über einen Antriebsriemen 20, vorzugsweise einen Zahnriemen, der über eine Antriebsriemenscheibe 22 angetrieben wird. Der Antriebsmotor 18 ist an dem in Fig.1 linken Endbereich eines Wipparms 24 angebracht, wohingegen die drehantreibbare Schleifscheibe 16 an dem entgegengesetzten in Fig.1 rechten Ende des Wipparms 24 angebracht ist. Durch den hohl ausgebildeten Wipparm 24 erstreckt sich der Antriebsriemen 20, wobei zum Antreiben der Schleifscheibe 16 eine in Fig.5 gezeigte und dort mit 54 bezeichnete Abtriebsriemenscheibe in dem Wipparm 24 drehbar gelagert ist.

Der Wipparm 24 ist zwischen einem Paar in Fig.1 bis 3 hintereinander in Deckung liegender Schwenklagerlaschen 26 gelagert. Die Schwenklagerlaschen 26 sind um eine orthogonal zur Zeichenebene der Fig.1 bis 3 verlaufende erste Schwenkachse C relativ zu dem Lagerkörper 14 verschwenkbar und an diesem Lagerkörper 14 gelagert. Die Schwenkbewegung der Schwenklagerlaschen 26 um die erste Schwenkachse C ist durch den strichpunktierten Bogen D dargestellt. Dieser Schwenkbogen D beschreibt die Bewegungsbahn einer zweiten Schwenkachse E, die parallel zur ersten Schwenkachse C verläuft, das heißt ebenfalls orthogonal zur Zeichenebene gemäß den Fig.1 bis 3. Die zweite Schwenkachse E ist diejenige Schwenkachse, um die der Wipparm 24 bezüglich der Schwenklagerlaschen 26 verschwenkbar ist. Die strichpunktierte kreissegmentförmige Kurve F zeigt die isoliert betrachtete Bewegung der Antriebsachse B bei einer Verschwenkung des Wipparms 24 um die zweite Schwenkachse E.

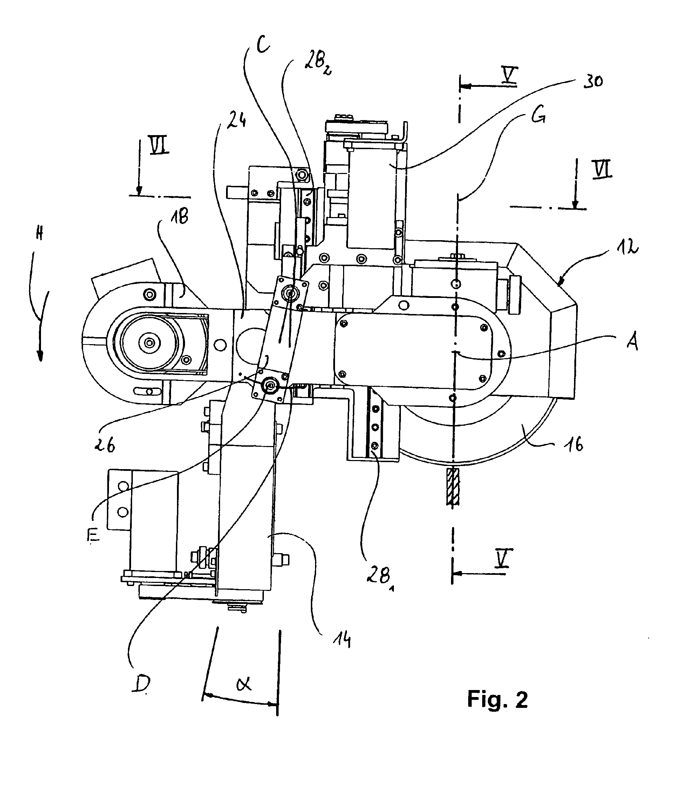

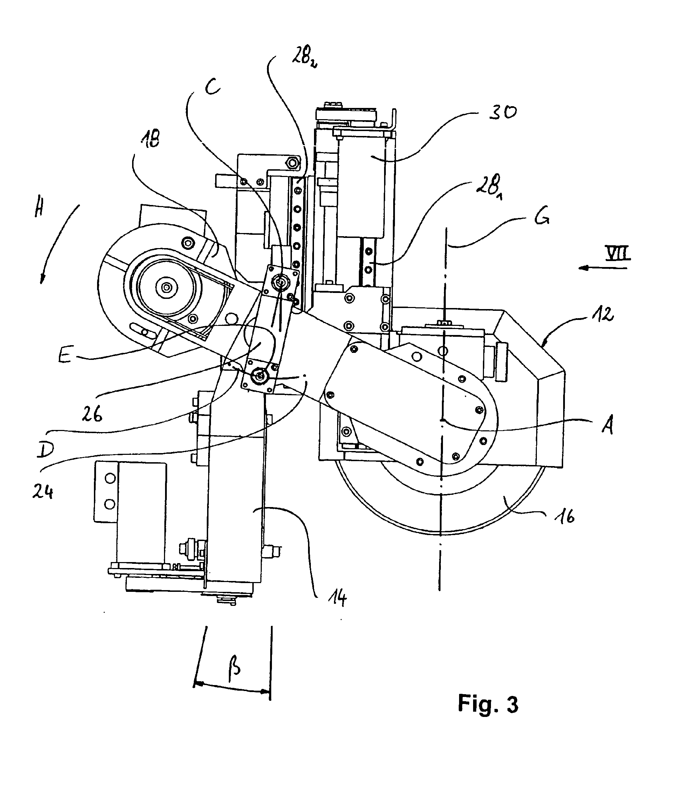

An dem Lagerkörper 14 sind ferner Linearführungen 28₁ und 28₂ vorgesehen, so dass vermittels einer Linearantriebseinrichtung 30 vorzugsweise mit Kugelgewindeantrieb eine Linearbewegung des in Fig.1 bis 3 rechten Endes des Wipparms 24 durchgeführt werden kann. Dabei bewegt sich die Drehachse A entlang der strichpunktierten Linie G. Während einer derartigen Linearbewegung des in Fig.1 bis 3 rechten Endes des Wipparms 24 und letzen Endes der Schleifscheibe 16 entlang der Linie G aus der in Fig. gezeigten Freigabestellung, in der ein zu bearbeitendes Bandsägeblatt 32 freigegeben ist, über eine in Fig.2 gezeigte Mittelstellung in eine in Fig.3 gezeigte Bearbeitungsstellung maximalen Hubs kommt es zu einer gekoppelten Schwenkbewegung von Wipparm 24 und Schwenklagerlaschen 26. Betrachtet man Fig.1 bis 3 so erkennt man, dass die Kombination aus Linearbewegung entlang der Linie G und Schwenkbewegung bezüglich des Lagerkörpers 14 um die erste Schwenkachse C eine Auslenkung der Schwenklagerlaschen 26 aus ihrer in Fig.1 gezeigten Stellung über die in Fig.2 gezeigte Winkelstellung mit dem Winkel α in die in Fig.3 gezeigte Auslenkstellung mit dem Winkel β erforderlich macht. Erfindungsgemäß ist es also möglich, den Wipparm 24 unter Ausnutzung der Linearantriebseinrichtung 30 linear entlang der strichpunktierten Linie G und geführt über die Linearführungen 28₁ und 28₂ zu verlagern, wobei der den Antriebsmotor 18 haltende Endbereich des Wipparms 24 jeweils nach oben verschwenkt wird.

Dabei ist es von besonderem Vorteil, dass die Masse des Antriebsmotors 18 als Gegengewicht zu der Masse der an dem rechten Ende des Wipparms 24 angebrachten Komponenten der Bearbeitungseinrichtung 12 wirkt. Vorzugsweise ist das auf der in den Figuren bezüglich der zweiten Schwenkachse E linken Seite auftretende, massebedingt an dem Wipparm 24 angreifende Drehmoment geringfügig größer als das in den Figuren auf der bezüglich der zweiten Schwenkachse E rechten Seite an dem Wipparm 24 massebedingt auftretende Drehmoment. Dies bedeutet, dass das in den Figuren bezüglich der zweiten Schwenkachse E auf der linken Seite auftretende resultierende Drehmoment entsprechend Pfeil H versucht den Antriebsmotor 18 und mit diesem den Endbereich des Wipparms 24 nach unten zu verschwenken und dabei die Schleifscheibe 16 nach oben zu verschwenken. Mit anderen Worten muss die Antriebseinrichtung 30 zur Bewegung der Schleifscheibe 16 aus der in Fig.1 gezeigten Freigabestellung über die in Fig.2 gezeigte Mittelstellung in die in Fig.3 gezeigte maximale Bearbeitungsstellung unter Aufbringung einer Antriebskraft verlagern.

Die auf beiden Seiten bezüglich der zweiten Schwenkachse E an dem Wipparm 24 angreifenden Drehmomente kompensieren sich größtenteils und das resultierende Drehmoment H ist derart bemessen, dass lediglich geringe Kräfte über die Antriebseinrichtung 30 aufzubringen sind, um eine Bewegung aus der in Fig.1 gezeigten Stellung in die in Fig.3 gezeigte Stellung zu realisieren. Wird die Maschine 10 beispielsweise wegen eines Stromausfalls oder zur Herbeiführung eines Ruhezustands nicht mehr bestromt, so behält der Wipparm 24 unter der Wirkung des resultierenden Drehmoments H und des mechanischen Widerstands, insbesondere des Reibungswiderstands, des Linearantriebs 30 zunächst seine Stellung bei und lässt sich unter geringem Kraftaufwand in die in Fig.1 gezeigte Freigabestellung zurück bewegen, in der das Bandsägeblatt 32 freigegeben ist.

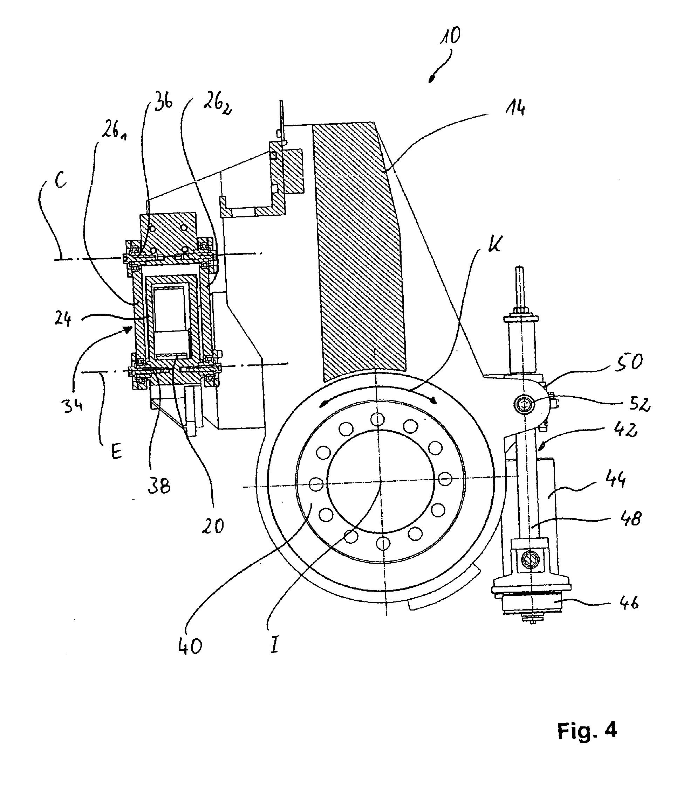

In den Fig.4 bis 7 sind weitere Funktionen und Details bezüglich des Aufbaus der erfindungsgemäßen Maschine 10 dargestellt und werden im Folgenden beschrieben.

Fig.4 zeigt einen Schnitt entlang der Schnittlinie IV-IV aus Fig.1. Insbesondere ist in Fig.4 der Aufbau der Schwenklageranordnung 34 gezeigt. Diese umfasst, wie vorstehend bereits angedeutet, zwei Schwenklagerlaschen 26₁ und 26₂, die über ein erstes Schwenklager 36, das die erste Schwenkachse C definiert, relativ zu dem Lagerkörper 14 schwenkbar gelagert sind. An dem von dem Schwenklager 36 entfernten Ende der Schwenklagerlaschen 26₁ und 26₂ ist ein weiteres Schwenklager 38 angeordnet, das die zweite Schwenkachse E definiert. Über dieses zweite Schwenklager 38 ist der Wipparm 24 um die zweite Schwenkachse E schwenkbar gelagert.

Fig.4 zeigt ferner, dass der Wipparm 24 als Hohlprofil ausgebildet ist, wobei der Antriebsriemen 20 sich in dem Hohlraum des Wipparms 24 in Längsrichtung erstreckt und zwischen der in Fig.2 gezeigten Antriebsriemenscheibe 22 und der in Fig.5 gezeigten und zum Antrieb der Schleifscheibe 16 vorgesehenen Abtriebsriemenscheibe 54 gespannt ist.

Fig.4 zeigt ferner, dass der Lagerkörper 14 um eine dritte Schwenkachse I entsprechend dem Doppelpfeil K verschwenkbar ist, und zwar um eine Lagerachse 40, die mit der nicht gezeigten Basis verbunden ist. Die Verschwenkung erfolgt über einen Gewindetrieb 42 mit einer über einen Motor 44 (siehe Fig.1) und einen Antriebsriemen 46 drehantreibbaren Gewindespindel 48 und einer darauf geführten Spindelmutter 50, die bei 52 gelenkig mit dem Lagerkörper 14 verbunden ist.

Fig.5 zeigt die Abtriebsriemenscheibe 54 und deren Kopplung mit der Schleifscheibe 16.

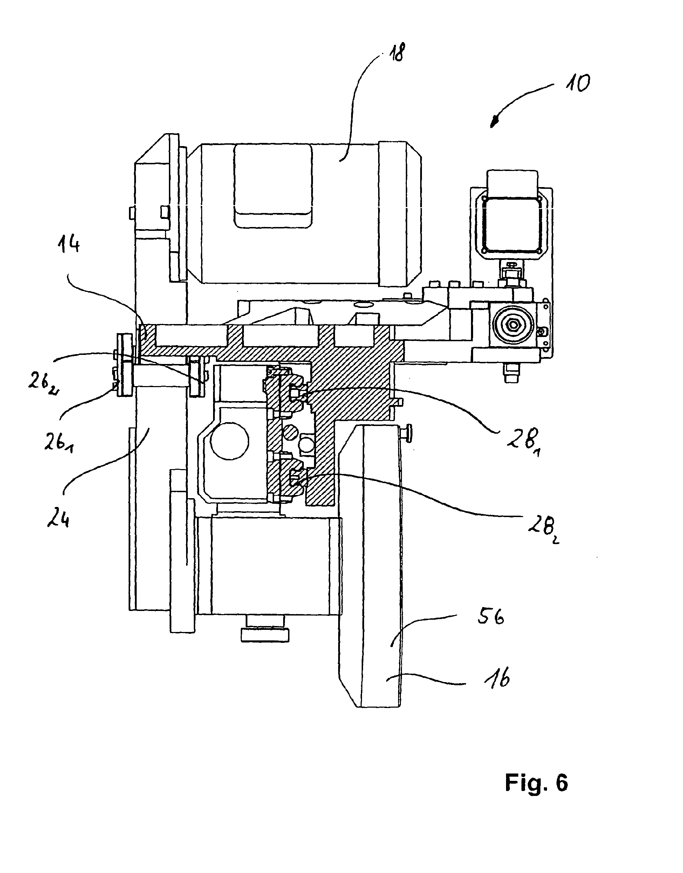

In der Schnittansicht gemäß Fig.6 ist gezeigt, dass zur Linearführung entlang der Linie G tatsächlich zwei Linearführungen 28₁ und 28₂ vorgesehen sind. Fig.6 zeigt auch nochmals das Prinzip des Wipparms 24, an dessen einen Ende der Antriebsmotor 18 angebracht ist und an dessen anderen Ende die Schleifscheibe 16 bzw. ein diese teilweise umgebendes Schutzgehäuse vorgesehen ist.

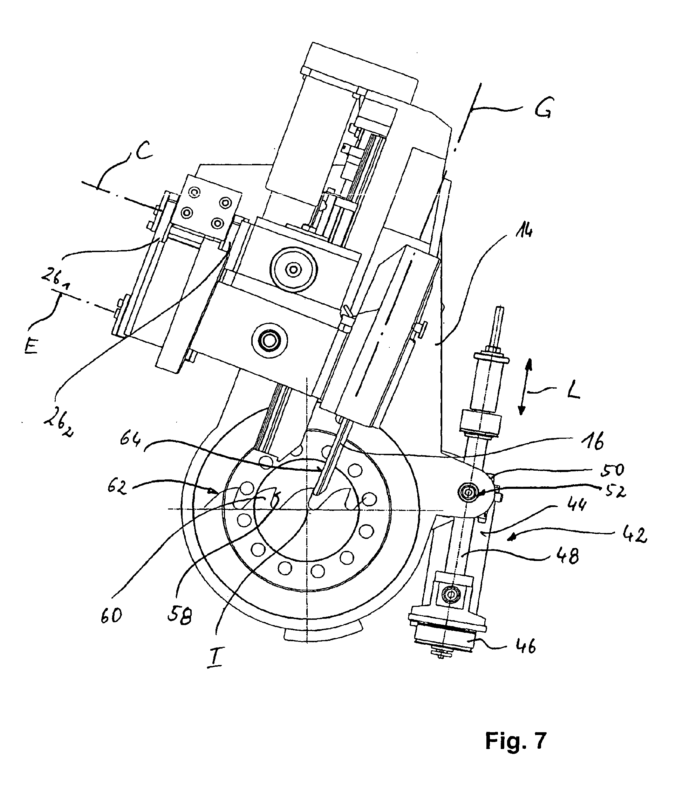

Fig.7 zeigt die Verschwenkung des Lagerkörpers 14 um die dritte Schwenkachse I in Anpassung an den gewünschten geometrischen Verlauf der Zahnbrust 58, insbesondere zum Bearbeiten des Spanwinkels, einzelner Zähne 60 eines zu bearbeitenden Bandsägeblattes 62, so dass die Schleifscheibe 16 mit ihrer Bearbeitungsseite 64 im Wesentlichen parallel entlang der Linie G zu der Zahnbrust 58 des jeweils zu bearbeitenden Zahns 60 eintauchen kann. Die Verschwenkung um die dritte Schwenkachse I wird, wie bereits vorstehend beschrieben, vermittels des Gewindetriebs 42 vollzogen, indem die Gewindespindel 48 über den Antriebsriemen 46 ausgehend von dem Antriebsmotor 44 angetrieben wird, so dass sich die Spindelmutter 50 auf der Gewindespindel 48 in Richtung des Pfeils L verlagert.

Schließlich sei noch darauf hingewiesen, dass die Bearbeitungseinrichtung 12 auch entlang der in Fig.1 gezeigten Verlagerungsrichtung M in begrenztem Umfang verlagerbar ist, um die Antriebsachse A relativ zu der Mitte des Bandsägeblatts 32, wie in Fig.1 gezeigt, zu positionieren. Dadurch kann die Maschine 10 auf verschiedene Blattdicken eingestellt werden.

## Patentansprüche

1. Maschine (10) zum Bearbeiten von mit Schneidzähnen (60) versehenen langgestreckten Werkstücken (32), insbesondere zum Schleifen von Bandsägeblättern, mit einer Maschinenbasis (40) und einer Bearbeitungseinrichtung (12), die ein drehantreibbares Werkzeug (16), insbesondere eine Schleifscheibe, zum Bearbeiten des Werkstücks (32) aufweist, wobei die Bearbeitungseinrichtung (12) relativ zu der Maschinenbasis (40) und dem Werkstück (32) verlagerbar ist,
wobei die Bearbeitungseinrichtung (12) vermittels einer Schwenklageranordnung (34) gelagert ist, die eine Schwenkbewegung der Bearbeitungseinrichtung (12) relativ zu der Maschinenbasis (40) zulässt, durch welche sich das Werkzeug (16) relativ zu der Maschinenbasis (40) und dem Werkstück (32) linear bewegt,
**dadurch gekennzeichnet, dass** die Bearbeitungseinrichtung (12) vermittels eines Linearantriebs (28, 30) relativ zu der Maschinenbasis (40) entlang einer ersten Linearverlagerungsachse (G) linear verlagerbar ist, wobei dem Linearantrieb eine Linearführung (28) zugeordnet ist.

2. Maschine (10) nach Anspruch 1,
**dadurch gekennzeichnet, dass** die Linearführung als eine Doppellinearführung (28₁, 28₂) ausgebildet ist.

3. Maschine (10) nach Anspruch 1 oder 2,
**dadurch gekennzeichnet, dass** der Linearantrieb (28, 30) einen Kugelgewindetrieb aufweist.

4. Maschine (10) nach einem der vorangehenden Ansprüche,
**dadurch gekennzeichnet, dass** die Schwenklageranordnung (34) wenigstens eine Schwenklagerlasche (26₁, 26₂) aufweist, die um eine erste Schwenkachse (C) relativ zu der Maschinenbasis (40) verschwenkbar ist und an der um eine zu der ersten Schwenkachse (C) parallele zweite Schwenkachse (E) schwenkbar die Bearbeitungseinrichtung (12) gelagert ist.

5. Maschine (10) nach Anspruch 4,
**dadurch gekennzeichnet, dass** die erste und zweite Schwenkachse (C, E) jeweils im wesentlichen orthogonal zur ersten Linearverlagerungsachse (G) verläuft.

6. Maschine (10) nach Anspruch 4 oder 5,
**dadurch gekennzeichnet, dass** die Schwenklageranordnung (34) zwei Schwenklagerlaschen (26₁, 26₂) aufweist, die beidseits der Bearbeitungseinrichtung (12) angeordnet sind.

7. Maschine (10) nach einem der vorangehenden Ansprüche,
**dadurch gekennzeichnet, dass** die Bearbeitungseinrichtung (12) einen Wipparm (24) aufweist, an dessen einen Endbereich das drehantreibbare Werkzeug (16) angeordnet ist und an dessen entgegengesetzten anderen Endbereich ein Drehantrieb (18) zum Drehantreiben des Werkzeugs (16) angeordnet ist.

8. Maschine (10) nach Anspruch 4 und 7,
**dadurch gekennzeichnet, dass** die erste Schwenkachse (C) oberhalb des Wipparms (24) verläuft und dass die zweite Schwenkachse (E) unterhalb des Wipparms (24) verläuft.

9. Maschine (10) nach Anspruch 7 oder 8,
**dadurch gekennzeichnet, dass** die zweite Schwenkachse (E) bezüglich des Wipparms (24) derart angeordnet ist, dass die Masse des Drehantriebs (18) die Bearbeitungseinrichtung (12) in einer Richtung (H) zu verschwenken sucht, so dass sich das Werkzeug (16) von dem Werkstück (32) weg bewegt.

10. Maschine (10) nach einem der Ansprüche 7 bis 9,
**dadurch gekennzeichnet, dass** der Drehantrieb (18) und das Werkzeug (16) über eine Getriebeanordnung, vorzugsweise über einen Riementrieb (22, 20, 54), kraftübertragend gekoppelt sind.

11. Maschine (10) nach Anspruch 4 und einem der vorangehenden Ansprüche, **gekennzeichnet durch** einen Lagerkörper (14), der um eine dritte Schwenkachse (I) an der Maschinenbasis (40) schwenkbar gelagert ist, wobei an dem Lagerkörper (14) die Bearbeitungseinrichtung (12) um die erste und zweite Schwenkachse (C, E) schwenkbar gelagert ist.

12. Maschine (10) nach Anspruch 11,
**dadurch gekennzeichnet, dass** die dritte Schwenkachse (I) im Wesentlichen orthogonal zu der ersten und zweiten Schwenkachse (C, E) und im Wesentlichen orthogonal zu der ersten Linearbewegungsachse (G) verläuft.

13. Maschine (10) nach Anspruch 11 oder 12,
**dadurch gekennzeichnet, dass** das drehantreibbare Werkzeug (16) entlang einer zweiten Linearverlagerungsachse (M) verlagerbar ist, wobei die zweite Linearverlagerungsachse (M) jeweils im wesentlichen orthogonal zur ersten Linearverlagerungsachse (G) und zur dritten Schwenkachse (I) verläuft.

14. Maschine (10) nach den Ansprüchen 12 und 13,
**dadurch gekennzeichnet, dass** die Bewegung entlang der ersten Linearverlagerungsachse (G) oder/und entlang der zweiten Linearverlagerungsachse (M) oder/und um die dritte Schwenkachse (I) numerisch gesteuert ist.

15. Maschine (10) nach einem der vorangehenden Ansprüche,
**dadurch gekennzeichnet, dass** der Drehantrieb einen Antriebsmotor (18) aufweist, der vorzugsweise von einem frequenzgeregelten Drehstrommotor oder einem AC-Motor zur Konstanthaltung der Umfangsgeschwindigkeit gebildet ist.

## Claims

1. Machine (10) for machining long workpieces (32) provided with cutting teeth (60), particularly for grinding endless saw blades, comprising a machine base (40) and a machining device (12) which has a rotatably drivable tool (16), particularly a grinding wheel, for machining the workpiece (32), the machining device (12) being displaceable relative to the machine base (40) and the workpiece (32),
the machining device (12) being mounted by means of a pivot bearing arrangement (34) permitting a pivotal movement of the machining device (12) relative to the machine base (40), which results in the tool (16) moving linearly relative to the machine base (40) and the workpiece (32),
**characterized in that** the machining device (12) is linearly displaceable relative to the machine base (40) along a first linear displacement axis (G) by means of a linear drive (28, 30), a linear guide (28) being associated with the linear drive.

2. Machine (10) according to Claim 1,
**characterised in that** the linear guide (28) is designed as a double linear guide (28₁, 28₂).

3. Machine (10) according to Claim 1 or 2,
**characterised in that** the linear drive (28, 30) comprises a ball-and-screw spindle drive.

4. Machine (10) according to one of the preceding claims,
**characterised in that** the pivot bearing arrangement (34) comprises at least one pivot bearing plate (26₁, 26₂), which is pivotable about a first pivot axis (C) relative to the machine base (40) and on which the machining device (12) is mounted such that it is pivotable about a second pivot axis (E) parallel with the first pivot axis (C).

5. Machine (10) according to Claim 4,
**characterised in that** the first and the second pivot axis (C, E) each extends substantially orthogonally to the first linear displacement axis (G).

6. Machine (10) according to Claim 4 or 5,
**characterised in that** the pivot bearing arrangement (34) comprises two pivot bearing plates (26₁, 26₂) arranged on both sides of the machining device (12).

7. Machine (10) according to one of the preceding claims,
**characterised in that** the machining device (12) has a rocker arm (24), on the one end region of which the rotatably drivable tool (16) is arranged and on the other opposite end region of which a rotary drive (18) for rotatably driving the tool (16) is arranged.

8. Machine (10) according to Claims 4 and 7,
**characterised in that** the first pivot axis (C) extends above the rocker arm (24) and **in that** the second pivot axis (E) extends below the rocker arm (24).

9. Machine (10) according to Claim 7 or 8,
**characterised in that** the second pivot axis (E) is arranged with respect to the rocker arm (24) in such a way that the mass of the rotary drive (18) attempts to pivot the machining device (12) in a direction (H) so that the tool (16) moves away from the workpiece (32).

10. Machine (10) according to one of Claims 7 to 9,
**characterised in that** the rotary drive (18) and the tool (16) are coupled in force-transmitting manner by way of a gear arrangement, preferably by way of a belt drive (22, 20, 54).

11. Machine (10) according to Claim 4 and one of the preceding claims,
**characterised by** a bearing body (14) which is mounted on the machine base (40) such that it is pivotable about a third pivot axis (I), the machining device (12) being mounted on the bearing body (14) such that it is pivotable about the first and the second pivot axis (C, E).

12. Machine (10) according to Claim 11,
**characterised in that** the third pivot axis (I) extends substantially orthogonally to the first and the second pivot axis (C, E) and substantially orthogonally to the first linear movement axis (G).

13. Machine (10) according to Claim 11 or 12,
**characterised in that** the rotatably drivable tool (16) is displaceable along a second linear displacement axis (M), the second linear displacement axis (M) extending in each case substantially orthogonally to the first linear displacement axis (G) and the third pivot axis (I).

14. Machine (10) according to Claims 12 and 13,
**characterised in that** the movement along the first linear displacement axis (G) and/or along the second linear displacement axis (M) or/and about the third pivot axis (I) is numerically controlled.

15. Machine (10) according to one of the preceding claims,
**characterised in that** the rotary drive comprises a drive motor (18) preferably formed by a frequency-controlled three-phase motor or an A.C. motor for keeping the circumferential speed constant.

## Revendications

1. Machine (10) pour usiner des pièces (32) étirées pourvues de dents coupantes (60), en particulier pour dresser des lames de scie à ruban, comportant une base pour machine (40) et un dispositif d'usinage (12) présentant un outil (16) entraînable en rotation, notamment une meule pour usiner la pièce (32), le dispositif d'usinage (12) étant déplaçable relativement à la base pour machine (40) et à la pièce (32),
le dispositif d'usinage (12) étant monté sur palier au moyen d'un agencement de paliers pivotants (34) qui permet un mouvement pivotant du dispositif d'usinage (12) relativement à la base pour machine (40), lequel mouvement fait se déplacer l'outil (16) selon un mouvement linéaire par rapport à la base pour machine (40) et à la pièce (32),
**caractérisée en ce que** le dispositif d'usinage (12) est linéairement déplaçable le long d'un premier axe de déplacement linéaire (G) à l'aide d'un entraînement linéaire (28, 30) relativement à la base pour machine (40), un guidage linéaire (28) étant attribué audit entraînement linéaire.

2. Machine (10) selon la revendication 1,
**caractérisée en ce que** le guidage linéaire est conçu sous forme d'un guidage linéaire double (28₁, 28₂).

3. Machine (10) selon la revendication 1 ou 2,
**caractérisée en ce que** l'entraînement linéaire (28, 30) présente une vis d'entraînement à billes.

4. Machine (10) selon l'une des revendications précédentes,
**caractérisée en ce que** l'agencement de paliers pivotants (34) présente au moins une plaque de palier pivotant (26₁, 26₂) laquelle peut être amenée à pivoter autour d'un premier axe de pivotement (C) par rapport à la base pour machine (40) et sur laquelle le dispositif d'usinage (12) est monté pivotant autour d'un deuxième axe de pivotement (E) parallèle au premier axe de pivotement (C).

5. Machine (10) selon la revendication 4,
**caractérisée en ce que** le premier et le deuxième axe de pivotement (C, E) s'étendent chacun pour l'essentiel orthogonalement par rapport au premier axe de déplacement linéaire (G).

6. Machine (10) selon la revendication 4 ou 5,
**caractérisée en ce que** l'agencement de paliers pivotants (34) présente deux plaques de palier pivotant (26₁, 26₂), lesquelles sont disposées de part et d'autre du dispositif d'usinage (12).

7. Machine (10) selon l'une des revendications précédentes,
**caractérisée en ce que** le dispositif d'usinage (12) présente un bras basculant (24) à l'une des extrémités duquel est monté l'outil (16) entraînable en rotation et à l'autre extrémité opposée duquel est monté un entraînement en rotation (18) pour entraîner en rotation l'outil (16).

8. Machine (10) selon les revendications 4 et 7,
**caractérisée en ce que** le premier axe de pivotement (C) s'étend au-dessus du bras basculant (24) et **en ce que** le deuxième axe de pivotement (E) s'étend au-dessous du bras basculant (24).

9. Machine (10) selon la revendication 7 ou 8,
**caractérisée en ce que** le deuxième axe de pivotement (E) est disposé par rapport au bras basculant (24) de telle manière que la masse de l'entraînement en rotation (18) cherche à faire pivoter le dispositif d'usinage (12) dans un sens (H) si bien que l'outil (16) s'éloigne de la pièce (32).

10. Machine (10) selon l'une des revendications 7 à 9,
**caractérisée en ce que** l'entraînement en rotation (18) et l'outil (16) sont couplés par l'intermédiaire d'un mécanisme de transmission, de préférence par une transmission par courroie (22, 20, 54).

11. Machine (10) selon la revendication 4 et l'une des revendications précédentes,
**caractérisée par** un corps de palier (14), lequel est monté pivotant autour d'un troisième axe de pivotement (I) sur la base pour machine (40), le dispositif d'usinage (12) étant monté pivotant autour du premier et du deuxième axe de pivotement (C, E) sur le corps de palier (14).

12. Machine (10) selon la revendication 11,
**caractérisée en ce que** le troisième axe de pivotement (I) s'étend pour l'essentiel orthogonalement par rapport au premier et au deuxième axe de pivotement (C, E) et pour l'essentiel orthogonalement par rapport au premier axe de déplacement linéaire (G).

13. Machine (10) selon la revendication 11 ou 12,
**caractérisée en ce que** l'outil (16) entraînable en rotation est déplaçable le long d'un deuxième axe de déplacement linéaire (M), le deuxième axe de déplacement linéaire (M) s'étendant pour l'essentiel orthogonalement par rapport au premier axe de déplacement linéaire (G) et au troisième axe de pivotement (I).

14. Machine (10) selon les revendications 12 et 13,
**caractérisée en ce que** le mouvement le long du premier axe de déplacement linéaire (G) et/ou le long du deuxième axe de déplacement linéaire (M) et/ou autour du troisième axe de pivotement (I) sont commandés numériquement.

15. Machine (10) selon l'une des revendications précédentes,
**caractérisée en ce que** l'entraînement en rotation présente un moteur d'entraînement (18) constitué de préférence par un moteur triphasé à fréquence régulée ou par un moteur à courant alternatif afin de maintenir constante la vitesse circonférentielle.
